# EUROPEAN PATENT APPLICATION

(11) **EP 4 478 524 A1**
(43) Date of publication of application: **18.12.2024**
(21) Application number: 23752662.9
(22) Date of filing: 24.01.2023
(51) Int. Cl.: H01M 50/578, H01M 50/152, H01M 50/342, H01M 50/559

(54) **CYLINDRICAL BATTERY AND MANUFACTURING METHOD THEREOF**

(30) Priority: 09.02.2022 JP 2022018708
(71) Applicant: Panasonic Energy Co., Ltd., Osaka 570-8511 (JP)
(72) Inventor: SUGIMOTO, Shuji, Kadoma-shi, Osaka 571-0057 (JP)
(74) Representative: Eisenführ Speiser
(86) International application number: PCT/JP2023/002060
(87) International publication number: WO 2023/153194

(57) **Abstract**

A cylindrical battery (10) comprises: a housing canister (16) that has a bottomed cylindrical shape and that accommodates an electrode (14); and a sealing body (17) that seals an opening of the housing canister (16). The sealing body (17) includes a valve body (26) and a terminal plate (25). The valve body (26) includes: a central valve-section (26a) that, when the internal pressure of the battery rises, deforms upward relative to the battery so as to separate from the terminal plate (25); and an outer-circumferential section (26b) that is crimped and fixed to the opening of the housing canister (16). The position of the bottom surface of the valve section (26a) and the position of the bottom surface of the outer-circumferential section (26b) are disposed on the same plane.

## Description

### TECHNICAL FIELD

The present disclosure generally relates to a cylindrical battery, and a manufacturing method thereof.

### BACKGROUND ART

Lithium-ion secondary batteries have features of being light weight, having a high electromotive force, and a high energy density, and therefore, the demand for the lithium-ion secondary batteries is increasing as power sources for driving a variety of portable electronic devices and mobile communication devices such as portable telephones, digital cameras, video cameras, and notebook personal computers.

When the lithium-ion secondary batteries used as a driving power source are incorporated into the device main body, a plurality of batteries are connected in series or parallel, and a safety element such as a PTC element is attached to each battery. A lead plate and a safety element are generally welded to a positive electrode terminal side and an outer housing can serving as a negative electrode terminal of the battery. A mainstream welding method conventionally represented by resistance welding has been performed by applying an external pressure and a voltage.

PATENT LITERATURE 1 discloses a cylindrical battery in which a vent member having a current interrupt device is shared by a positive electrode terminal function.

### CITATION LIST

### PATENT LITERATURE

PATENT LITERATURE 1: International Publication No. WO 2016/157749

### SUMMARY

In the welding method by metal diffusion welding using high frequency vibration like wire bonding that has begun to be used in recent years, the vent member may be extremely warped upward or downward, resulting in an unstable actuation pressure of a current interrupt device (hereinafter, referred to as a CID) and an unstable vent pressure for causing the vent member to rupture, which may lead to a functional loss of a sealing assembly.

It is an advantage of the present disclosure to provide a cylindrical battery that can reduce warpage of a vent member of a sealing assembly even when metal diffusion welding is performed, which makes it possible to suppress abnormalities in an actuation pressure of a CID and a vent pressure for causing the vent member to rupture.

A cylindrical battery according to the present disclosure comprises a bottomed cylindrical outer housing can that houses an electrode assembly, and a sealing assembly that seals an opening of the outer housing can, in which the sealing assembly includes a vent member and a terminal plate, the vent member includes a vent at a center that is deformed upward of the battery when an internal pressure of the battery increases, resulting in separation from the terminal plate, and an outer circumferential portion that is fixed to the opening of the outer housing can by caulking, and a lower face position of the vent and a lower face position of the outer circumferential portion are arranged on the same plane.

The cylindrical battery according to the present disclosure can reduce warpage of a vent member of a sealing assembly even when metal diffusion welding is performed, which makes it possible to suppress abnormalities in an actuation pressure of a CID and a vent pressure for causing the vent member to rupture.

### BRIEF DESCRIPTION OF DRAWING

FIG. 1 is a sectional view of a cylindrical battery of an embodiment.
FIG. 2 is an enlarged sectional view of a sealing assembly of a cylindrical battery of Example 1.
FIG. 3 is an enlarged sectional view of a sealing assembly of a cylindrical battery of Comparative Example 1.

### DESCRIPTION OF EMBODIMENTS

Hereinafter, embodiments of the present disclosure will be described in detail with reference to the drawings. In the following description, specific shapes, materials, directions, numeral values, and the like are exemplary illustrations for easy understanding of the present disclosure, and they can be properly modified to meet the usage, purpose, specifications, and so on. The selective combination of components of embodiments and modified examples, which are described below, are anticipated in advance.

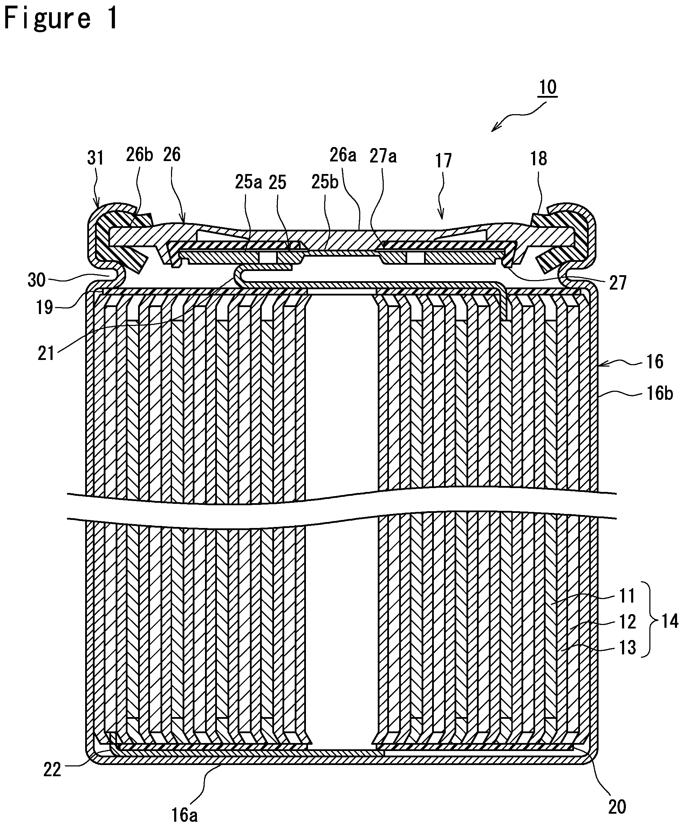

Hereinafter, an example of embodiments of a cylindrical battery according to the present disclosure will be described in detail with reference to the drawings. FIG. 1 is a sectional view of a cylindrical battery 10 of an example of embodiments.

As illustrated in FIG. 1, the cylindrical battery 10 comprises a bottomed cylindrical outer housing can 16 including a bottom face 16a and a side wall 16b, a sealing assembly 17 that seals an opening of the outer housing can 16, and a gasket 18 interposed between the outer housing can 16 and the sealing assembly 17. The cylindrical battery 10 comprises an electrode assembly 14 and an electrolyte that are housed in the outer housing can 16. The electrode assembly 14 includes a positive electrode 11, a negative electrode 12, and a separator 13, and has a structure in which the positive electrode 11 and the negative electrode 12 are spirally wound with the separator 13 interposed between the positive electrode 11 and the negative electrode 12.

In this specification, for convenience of explanation, the direction along an axial direction of the outer housing can 16 is defined as a "longitudinal direction or an up-and-down direction", the sealing assembly 17 side (an opening side of the outer housing can 16) of the cylindrical battery 10 is defined as "upper", and the bottom face 16a side of the outer housing can 16 is defined as "lower".

The positive electrode 11 has a positive electrode core, and a positive electrode mixture layer formed on at least one face of the core. For the positive electrode core, there can be used a foil of a metal such as aluminum or an aluminum alloy which is stable in a potential range of the positive electrode 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each face of the positive electrode core. For the positive electrode active material, there is used, for example, a lithium-transition metal composite oxide.

The negative electrode 12 has a negative electrode core, and a negative electrode mixture layer formed on at least one face of the core. For the negative electrode core, there can be used a foil of a metal such as copper or a copper alloy which is stable in a potential range of the negative electrode 12, a film in which such a metal is provided on a surface layer thereof, and the like. The negative electrode mixture layer includes a negative electrode active material and a binder such as styrene-butadiene rubber (SBR), and is preferably formed on each face of the negative electrode core. For the negative electrode active material, there is used, for example, graphite, or a silicon-containing compound.

The electrolyte may be an aqueous electrolyte, or may be a non-aqueous electrolyte. The electrolyte may be any of a liquid electrolyte and a solid electrolyte. In the present embodiment, a non-aqueous electrolyte is used for the electrolyte. The non-aqueous electrolyte includes a non-aqueous solvent, and an electrolyte salt dissolved in the non-aqueous solvent. For the non-aqueous solvent, there can be used, for example, esters, ethers, nitriles, amides, and a mixed solvent containing two kinds or more of these solvents. The non-aqueous solvent may also contain a halogen-substituted product obtained by substituting at least a part of hydrogen of these solvents with a halogen atom such as fluorine. For the electrolyte salt, there is used, for example, a lithium salt such as LiPF₆.

The cylindrical battery 10 comprises insulating plates 19 and 20 arranged on the upper and lower sides of the electrode assembly 14, respectively. In the example illustrated in FIG. 1, a positive electrode tab 21 connected to the positive electrode 11 extends to the sealing assembly 17 side through a through hole in the insulating plate 19, and a negative electrode tab 22 connected to the negative electrode 12 extends to the bottom face 16a side of the outer housing can 16 along the outside of the insulating plate 20. The positive electrode tab 21 is connected to a terminal plate 25 that is a bottom plate of the sealing assembly 17 by welding or the like, and a vent member 26 of the sealing assembly 17 electrically connected to the terminal plate 25 serves as a positive electrode external terminal. The negative electrode tab 22 is connected, by welding or the like, to an inner face of the bottom face 16a of the outer housing can 16, and the outer housing can 16 serves as a negative electrode external terminal.

The outer housing can 16 is a metal-made container that opens at one end (upper end) in the axial direction, in which the bottom face 16a has a disk shape, and the side wall 16b is formed into a cylindrical shape along an outer circumferential edge of the bottom face 16a. The sealing assembly 17 is formed into a disk shape corresponding to a shape of the opening of the outer housing can 16. The gasket 18 is a resin-made annular member, and is adapted to ensure the sealing property of the interior of the battery and ensure electric insulation between the outer housing can 16 and the sealing assembly 17.

The outer housing can 16 has a caulking portion 31 formed by bending inward an edge of the opening so that the caulking portion 31 presses the sealing assembly 17 through the gasket 18. In addition, the outer housing can 16 has a grooved portion 30 formed by causing the side wall 16b to project inward from the outside and configured to support the sealing assembly 17 through the gasket 18. The grooved portion 30 is formed into an annular shape along a circumferential direction of the outer housing can 16 by performing a spinning process on the side wall 16b from the outside.

The caulking portion 31 is formed by bending inward an opening edge (upper end) of the outer housing can 16, and faces the grooved portion 30 through the sealing assembly 17 and the gasket 18 so that the sealing assembly 17 is held between the caulking portion 31 and the grooved portion 30. The caulking portion 31 is formed into an annular shape along the circumferential direction of the outer housing can 16 in the same manner as the grooved portion 30, and presses a circumferential edge of the sealing assembly 17 from above through the gasket 18.

The sealing assembly 17 is a disk-shaped member comprising a CID. The sealing assembly 17 has a stacked structure of the terminal plate 25, an insulating plate 27, and the vent member 26 in this order from the electrode assembly 14 side. The terminal plate 25 is a metal plate including an annular portion 25a to which the positive electrode tab 21 is to be connected, and a thin center 25b that is disconnected from the annular portion 25a when an internal pressure of the battery exceeds a predetermined threshold.

The vent member 26 is disposed to face the terminal plate 25 with the insulating plate 27 in between. In the insulating plate 27, an opening 27a is formed at a center in a radial direction. The vent member 26 has a vent portion 26a that ruptures when the internal pressure of the battery exceeds a predetermined threshold, and an outer circumferential portion 26b to be caulked to the caulking portion 31 in the outer circumferential direction. The vent portion 26a is connected, by welding or the like, to the center 25b of the terminal plate 25 through the opening 27a of the insulating plate 27. The insulating plate 27 insulates a portion other than a connection portion between the annular portion 25a and the center 25b of the vent portion 26a.

The vent portion 26a includes a downward projection projecting inward of the battery, and a thin portion formed around the downward projection, and is formed at the center in the radial direction of the vent member 26. In the cylindrical battery 10, the terminal plate 25 to which the positive electrode tab 21 is connected is electrically connected to the vent member 26, whereby there is formed a current pathway connecting from the electrode assembly 14 to the vent member 26. If an abnormality occurs in the battery, causing an increase in the internal pressure of the battery, so that the internal pressure exceeds the actuation pressure of the CID, the terminal plate 25 breaks, and the center 25b is disconnected from the annular portion 25a, whereby the vent portion 26a is deformed to project outward of the battery. Thus, the current pathway is cut off. If the internal pressure of the battery further increases, so that the internal pressure exceeds the vent pressure, the vent portion 26a ruptures, resulting in formation of a gas venting port.

Since the vent portion 26a is thus affected by the actuation pressure of the CID and the vent pressure, it is important to manage a dimension between a lower portion of the sealing assembly 17 and the electrode assembly 14 within a predetermined range. In the cylindrical battery 10 of the present disclosure, a distance between a lower face of the vent portion 26a and a lower face of the outer circumferential portion 26b of the vent member 26 are maintained to be on the same plane in the axial direction of the cylindrical battery 10, which makes it possible to reduce influence on the actuation pressure of the CID and the vent pressure. Note that in the present disclosure, the same plane does not mean that the faces are perfectly aligned, but means that the faces are aligned within a range of 0.5 mm taking into consideration manufacturing variations.

The cylindrical battery 10 of the present disclosure comprises the bottomed cylindrical outer housing can 16 that houses the electrode assembly 14, and the sealing assembly 17 that seals an opening of the outer housing can 16, in which the sealing assembly 17 includes the vent member 26 and the terminal plate 25, the vent member 26 includes the vent portion 26a at a center that is deformed upward of the battery when an internal pressure of the battery increases, resulting in separation from the terminal plate 25, and the outer circumferential portion 26b that is fixed to the opening of the outer housing can 16 by caulking, and a lower face position of the vent portion 26a and a lower face position of the outer circumferential portion 26b are arranged on the same plane.

When an external lead is connected to the positive electrode external terminal, the external lead is connected to an upper face of the vent portion 26a by ultrasonic welding. In this case, a high frequency vibration is applied, in a direction orthogonal to a pressing direction (axial direction), to the external lead in a state of being pressed against the upper face of the vent portion 26a. At this time, since the sealing assembly 17 is supported by the grooved portion 30, when the lower face position of the vent portion 26a of the vent member 26 to which a load is applied during the ultrasonic welding is located below a supporting portion of the sealing assembly 17, the vent member 26 is likely to be deformed by the load in the longitudinal direction. Further, when the lower face position of the vent portion 26a of the vent member 26 and the lower face position of the outer circumferential portion 26b are not aligned with each other in the pressing direction, the deformation in the lateral direction is caused in the vent member 26, thus making it easy to cause warpage in the vent member 26. This reason is because when the lower face position of the vent portion 26a and the lower face position of the outer circumferential portion 26b are not aligned with each other, a distance from the outer circumferential portion 26b to a center of the vent portion 26a increases, thus making it easy to cause deformation of the vent 26 in response to the vibration in the lateral direction.

Since the lower face position of the outer circumferential portion 26b and the lower face position of the vent portion 26a are located on the same plane, the cylindrical battery 10 of the present disclosure has strength against the load in the longitudinal direction, and the distance from the outer circumferential portion 26b to the center of the vent portion 26a is short. Therefore, the vent member 26 is unlikely to be deformed against the vibration in the lateral direction during the metal diffusion welding.

By having the above configuration, the cylindrical battery 10 of the present disclosure can reduce warpage of the vent member 26 of the sealing assembly 17 even when metal diffusion welding is performed, which makes it possible to suppress abnormalities in an actuation pressure of the CID and a vent pressure for causing the vent member 26 to rupture.

Next, the cylindrical battery 10 of the present disclosure will be further described in detail with reference to Examples.

### <Example 1>

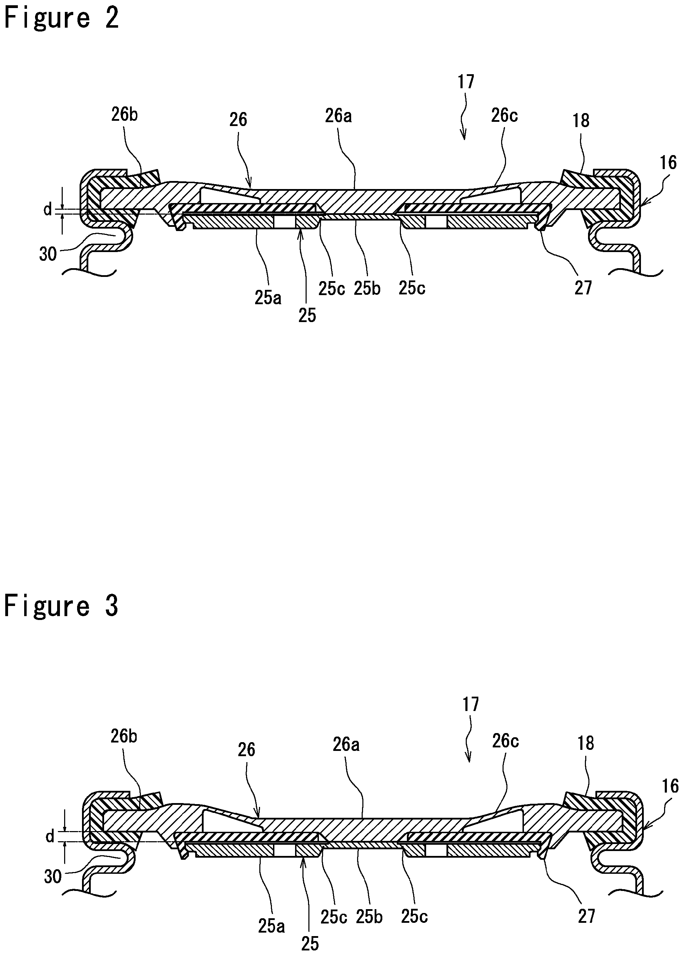

A cylindrical battery of Example 1 was produced in the following procedure. FIG. 2 illustrates an enlarged sectional view of the sealing assembly 17 produced in Example 1.

### (Production of Positive Electrode)

The positive electrode 11 was produced as follows. First, a positive electrode mixture slurry was produced by kneading a positive electrode active material and a binder such that the positive electrode active material and the binder were uniform in a dispersion medium. Polyvinylidene fluoride was used as the binder, and N-methylpyrolidone was used as the dispersion medium. A conductive agent such as graphite and carbon black was added to the positive electrode mixture slurry. This positive electrode mixture slurry was applied and dried on a positive electrode current collector to form a positive electrode mixture layer. At this time, a positive electrode current collector exposed portion where the positive electrode mixture layer was not formed was provided in a part of the positive electrode current collector. Next, the positive electrode mixture layer was compressed to a predetermined thickness by a roller, and the compressed electrode plate was cut into a predetermined size. Finally, the positive electrode tab 21 was connected to the positive electrode current collector exposed portion. As the positive electrode active material, a lithium transition metal composite oxide capable of occluding and releasing lithium ions was used.

### (Production of Negative Electrode)

The negative electrode 12 was produced as follows. First, a negative electrode mixture slurry was produced by kneading a negative electrode active material and a binder such that the negative electrode active material and the binder were uniform in a dispersion medium. A styrene-butadiene (SBR) copolymer or polyvinylidene fluoride (PVdF) was used as the binder, and water was used as the dispersion medium. A thickner such as carboxymethyl cellulose was added to the negative electrode mixture slurry. This negative electrode mixture slurry was applied and dried on a negative electrode current collector to form a negative electrode mixture layer. At this time, a negative electrode current collector exposed portion where the negative electrode mixture layer was not formed was provided in a part of the negative electrode current collector. Next, the negative electrode mixture layer was compressed to a predetermined thickness by a roller, and the compressed electrode plate was cut into a predetermined size. Finally, the negative electrode tab 22 was connected to the negative electrode current collector exposed portion.

As the negative electrode active material, a carbon material or a metal material capable of occluding and releasing lithium ions was used.

As the separator 13, a microporous membrane containing polyethylene (PE) as a main component was used.

### (Production of Non-Aqueous Electrolyte)

Ethylene carbonate (EC), methyl ethyl carbonate (MEC), and dimethyl carbonate (DMC) were mixed together in a volume ratio of 3:3:4. LiPF₆ was dissolved in the mixed solvent so that the concentration of LiPF₆ became 1.2 mol/L to produce a non-aqueous electrolyte.

### (Production of Electrode Assembly)

The positive electrode 11 and the negative electrode 12 were wound with the separator 13 interposed between the positive electrode 11 and the negative electrode 12 so that they were isolated from each other, and polypropylene tape was attached to the outermost circumference to produce the cylindrical electrode assembly 14.

### (Production of Battery)

As illustrated in FIG. 1, the insulating plate 20 was disposed in a lower portion of the electrode assembly 14, and the electrode assembly 14 was inserted into the outer housing can 16. The negative electrode tab 22 was connected to the bottom of the outer housing can 16 by resistance welding. Next, the insulating plate 19 was disposed in an upper portion of the electrode assembly 14, and a U-shaped grooved portion 30 having a width of 1.0 mm and a depth of 1.5 mm was formed by plastic welding in the circumferential direction in the vicinity of the opening of the outer housing can 16. Then, the positive electrode tab 21 was connected to the terminal plate 25 by laser welding, and the sealing assembly 17 was fixed by caulking to the grooved portion 30 formed in the outer housing can 16 through the gasket 18 to produce a cylindrical battery 10.

### (Production of Sealing Assembly)

A vent member 26 and a terminal plate 25 were produced by pressing a metal plate. For the vent member 26 and the terminal plate 25, aluminum was used. Note that the vent member 26 was produced so that a lower face of the vent portion 26a and a lower face of the outer circumferential portion were located on the same plane. Projections were formed in the center and the outer circumferential portion of the vent member 26 by pressing, and an annular thin portion 26c was formed around the projection at the center. If an internal pressure of the battery further increases after activation of the CID, this thin portion 26c breaks from the vent portion 26a as a starting point. Then, a region with a thin thickness was formed at the center of the terminal plate 25, and a thin portion 25c having an annular plane shape and a cross section in the V shape was formed in the region. An opening as a vent hole was provided in the terminal plate 25. The residual thickness of the thin portion 25c was adjusted so that the actuation pressure of the CID became 2.5 MPa.

The insulating plate 27 was produced by thermoforming polypropylene that is a thermoplastic resin.

The insulating plate 27 was pressurized by bending a part of the projection of the outer circumferential portion 26b of the vent member 26 produced as described above, and the vent member 26, the insulating plate 27, and the terminal plate 25 were fixed to each other by fixing the insulating plate 27 and the terminal plate 25. At this time, the projection at the center of the vent portion 26a was in contact with the region with thin thickness at the center of the terminal plate 25, and the vent portion 26a and the terminal plate 25 were welded to each other by emitting laser from the terminal plate 25 side.

When a distance d between the lower face of the vent portion 26a and the lower face of the outer circumferential portion 26b falls within 0.5 mm in the up-and-down direction with the outer circumferential face of the vent member 26 being used as a reference, their faces can be assumed to be on the same plane. The reason why the range is defined as 0.5 mm is because the ultrasonic welding is not affected in consideration of the processing accuracy of components, the processing accuracy of the battery, and the variations. Note that the distance d between the lower face of the vent portion 26a and the lower face of the outer circumferential portion 26b was 0.2 mm in Example 1.

### <Example 2>

A cylindrical battery of Example 2 was produced in the following procedure.

Although the lower face of the vent portion 26a and the lower face of the outer circumferential portion 26b were not located on the same plane when the vent member 26 was produced, a caulking fixing dimension was adjusted when the sealing assembly 17 was fixed by caulking to the grooved portion 30 formed in the outer housing can 16 through the gasket 18 to produce a battery so that the lower face of the vent portion 26a of the vent member 26 and the lower face of the outer circumferential portion 26b were located on the same plane. The battery was produced in the same manner as in Example 1, except that the above-described sealing assembly 17 was used. Note that the distance d between the lower face of the vent portion 26a and the lower face of the outer circumferential portion 26b was 0.2 mm in Example 2. The enlarged sectional view of the sealing assembly 17 produced in Example 2 was the same as in FIG. 2.

### <Comparative Example 1>

A cylindrical battery of Comparative Example 1 was produced in the following procedure. FIG. 3 illustrates an enlarged sectional view of a sealing assembly 17 produced in Comparative Example 1.

Without locating the lower face of the vent portion 26a and the lower face of the outer circumferential portion 26b on the same plane when the vent member 26 was produced, and adjusting a caulking fixing dimension when the sealing assembly 17 was fixed by caulking to the grooved portion 30 formed in the outer housing can 16 through the gasket 18, a battery was produced so that the lower face of the vent portion 26a of the vent member 26 and the lower face of the outer circumferential portion 26b were not located on the same plane. The battery was produced in the same manner as in Example 1, except that the above-described sealing assembly was used. The distance d between the lower face of the vent portion 26a and the lower face of the outer circumferential portion 26b was 0.7 mm in Comparative Example 1.

### <Experiment>

Five cylindrical batteries as described above of each of Examples 1 and 2 and Comparative Example 1 were produced, and then vibration was applied to each sealing assembly by ultrasonic welding. As the vibration conditions, the two types of the normal condition and the upper limit condition in which the welding strength is higher than that in the normal condition were provided as described below. It was confirmed whether the abnormality occurred in each of the actuation pressure of the CID and the vent pressure in the cylindrical battery after the vibration was applied. The results are summarized in Table 1 and Table 2.

### <Vibration Conditions>

Normal condition: Pressure 18 N, Voltage 5.8 V, Time 140 msec.

Upper limit condition: Pressure 18 N, Voltage 6.0 V, Time 170 msec.

**[Table 1]**

| Distance d | | Abnormality in CID actuation pressure | |
|---|---|---|---|
| | | Normal condition | Upper limit condition |
| Example1 | 0.2 mm | No occurrence | No occurrence |
| Example2 | 0.2 mm | No occurrence | No occurrence |
| Comparative Example1 | 0.7 mm | No occurrence | 2/5 Occurrence |

**[Table 2]**

| Distance d | | Abnormality in vent pressure | |
|---|---|---|---|
| | | Normal condition | Upper limit condition |
| Example1 | 0.2 mm | No occurrence | No occurrence |
| Example2 | 0.2 mm | No occurrence | No occurrence |
| Comparative Example1 | 0.7 mm | No occurrence | 2/5 Occurrence |

### <Evaluation>

As apparent from Table 1 and Table 2, in the cylindrical batteries in Examples 1 and 2, after vibration was applied under each of the normal condition and the upper limit condition, the abnormalities were not observed in the CID actuation pressure and vent pressure. In the cylindrical batteries 10 in Examples 1 and 2, it is considered that the warpage of the vent member 26 was suppressed even when the vibration was applied by ultrasonic welding, and abnormalities were not observed in the CID actuation pressure and vent pressure. In contrast, in some cylindrical batteries in Comparative Example 1, after vibration was applied under the upper limit condition, the abnormalities were observed in the CID actuation pressure and vent pressure. As a result, in the cylindrical batteries in Comparative Example 1, it is considered that the vibration by ultrasonic welding caused the warpage to occur in the vent member, resulting in occurrence of abnormalities in the CID actuation pressure and vent pressure. Accordingly, in the cylindrical batteries in Examples 1 and 2, the distance d between the lower face of the vent portion 26a and the lower face of the outer circumferential portion 26b is located on the same plane, whereby the vent member 26 of the sealing assembly 17 has the effect of suppressing the deformation such as warpage of the vent member 26 against external vibration that occurs during ultrasonic welding. In this way, it is found that the actuation pressure of the CID and the vent pressure function as designed, which prevents the sealing assembly 17 from leading to the functional loss.

The present invention is not limited to the above embodiments and modified examples, and various changes and improvements are possible within the matters described in the claims of the present application.

### REFERENCE SIGNS LIST

10 Cylindrical battery, 11 Positive electrode, 12 Negative electrode, 13 Separator, 14 Electrode assembly, 16 Outer housing can, 16a Bottom face, 16b Side wall, 17 Sealing assembly, 18 Gasket, 19 Insulating plate, 20 Insulating plate, 21 Positive electrode tab, 22 Negative electrode tab, 25 Terminal plate, 25a Annular portion, 25b Center, 25c Thin portion, 26 Vent member, 26a Vent portion, 26b Outer circumferential portion, 26c thin portion, 27 Insulating plate, 27a Opening, 30 grooved portion, d Distance between vent lower face position and outer circumferential lower face position

## Claims

1. A cylindrical battery, comprising:
a bottomed cylindrical outer housing can that houses an electrode assembly; and
a sealing assembly that seals an opening of the outer housing can,
wherein the sealing assembly includes a vent member and a terminal plate,
the vent member includes a vent portion at a center that is deformed upward of the battery when an internal pressure of the battery increases, resulting in separation from the terminal plate, and an outer circumferential portion that is fixed to the opening of the outer housing can by caulking, and
a lower face position of the vent portion and a lower face position of the outer circumferential portion are arranged on the same plane.

2. The cylindrical battery according to claim 1, wherein
the same plane means that a distance in an axial direction between the lower face position of the vent portion and the lower face position of the outer circumferential portion is within 0.5 mm.

3. A method of manufacturing a cylindrical battery that comprises:
a bottomed cylindrical outer housing can that houses an electrode assembly; and
a sealing assembly that seals an opening of the outer housing can,
wherein the sealing assembly includes a vent member and a terminal plate, and
the vent member includes a vent portion at a center that is deformed upward of the battery when an internal pressure of the battery increases, resulting in separation from the terminal plate, and an outer circumferential portion that is fixed to the opening of the outer housing can by caulking,
the method comprising the steps of
inserting the sealing assembly into the opening of the outer housing can; and
caulking the sealing assembly,
wherein the caulking the sealing assembly includes adjusting a caulking fixing dimension so that a lower face position of the vent portion and a lower face position of the outer circumferential portion are arranged on the same plane.

4. The method of manufacturing a cylindrical battery according to claim 3, wherein
the same plane means that a distance in an axial direction between the lower face position of the vent portion and the lower face position of the outer circumferential portion is within 0.5 mm.
